# EUROPÄISCHE PATENTSCHRIFT

(11) **EP 0 805 193 B1**
(45) Veröffentlichungstag und Bekanntmachung des Hinweises auf die Patenterteilung: **13.06.2001**
(21) Anmeldenummer: 97810202.8
(22) Anmeldetag: 08.04.1997
(51) Int. Cl.: C09J 5/00, B32B 31/12, B29C 65/48, A61C 5/12

(54) **Verfahren zur Verbindung einer Metallfolie mit einer Kunststofffolie**
Method for bonding a metal sheet with a plastic film
Procédé de liaison d'une feuille de métal avec un film de matière plastique

(30) Priorität: 29.04.1996 CH 107696
(43) Veröffentlichungstag der Anmeldung: 05.11.1997
(73) Patentinhaber: HAWE NEOS DENTAL Dr. H. V. WEISSENFLUH AG, 6934 Bioggio (CH)
(72) Erfinder: Kilcher, Beat, 6935 Bosco Luganese (CH); Von Weissenfluh, Beat A., 6925 Gentilino (CH)
(74) Vertreter: AMMANN PATENTANWAELTE AG BERN

(56) Entgegenhaltungen:
- EP-A- 0 124 847
- EP-A- 0 180 901
- FR-A- 2 553 029
- FR-A- 2 575 450
- US-A- 4 523 909
- US-A- 5 330 353
- US-A- 5 393 818
- DATABASE WPI Section Ch, Week 8035 Derwent Publications Ltd., London, GB; Class A32, AN 80-61592C XP002021462 & JP 55 095 565 A (MATSUSHITA ELEC WORKS) , 20.Juli 1980

## Beschreibung

Die vorliegende Erfindung bezieht sich auf ein Verfahren zur Verbindung einer Metallfolie mit einer Kunststoff-Folie und auf die Herstellung einer Matrize für die Dental-Medizin, die aus einem Metall- und Kunststoffteil besteht.

Eine solche kombinierte Matrize ist in der US-A-5 330 353 beschrieben und klinische Tests haben bewiesen, dass das metallische Teil der Matrize deren Einführung zwischen zwei Zähnen begünstigt, während der Kunststoffteil unabdingbar ist für die Belichtung von Zahnfüllungen aus polymerisierendem Kunststoff. In dieser US-Patentschrift werden relativ wenig Angaben zur Herstellung einer solchen kombinierten Matrize gegeben, es wird lediglich von der Verbindung der Metallfolie mit der Kunststoff-Folie durch Mikroätzen und Heissverkleben offenbart.

Aus der FR-A-2 553 029 ist ein Verfahren zur Herstellung eines thermoverformbaren Verbundmaterials bekannt, wobei zwecks besserer Klebewirkung zwischen einer Polyethylen-Folie und einer Metall-Folie erstere mittels einer Korona-Entladung behandelt wird. Die auf der gesamten Fläche zusammengeklebte Verbund-Folie ist ein Zwischenprodukt, wonach die Metall-Folie stellenweise abgeätzt wird, um beispielsweise Schuhsohlen herzustellen.

Aus der Database WPI, Section Ch, Week 8035, ist ein Verfahren zur Beschichtung einer Stahlfolie mit einer Kunststoff-Schicht bekannt, wobei ein UV-härtbarer Kleber verwendet wird.

Angesichts der erwünschten geringen Dicken der Folien einerseits und ihrer benötigten, relativ hohen Zerreissfestigkeit andererseits, die durch die zu verwendenden Matrizenspanner bedingt wird, ist es Aufgabe der vorliegenden Erfindung, ein Verfahren zur Herstellung einer Verbindung zwischen einer Metallfolie und einer Kunststoff-Folie und zur Herstellung einer Verbund-Matrize für die Dentalmedizin anzugeben, das das Verbinden von sehr dünnen Folien gestattet und eine hohe Zerreissfestigkeit aufweist. Solche Verfahren werden in den unabhängigen Ansprüchen 1 und 2 definiert. Die abhängigen Ansprüche beschreiben Weiterentwicklungen und Verbesserungen der in den unabhängigen Ansprüchen 1 und 2 definierten Verfahren.

Die Erfindung wird im folgenden anhand einer Zeichnung näher erläutert.
- Figur 1: zeigt schematisch eine Vorrichtung zur Durchführung der erfindungsgemässen Verfahren,
- Figur 2: zeigt eine Ausschnittsvergrösserung aus der Vorrichtung gemäss Figur 1 und
- Figur 3: zeigt eine nach dem Verfahren hergestellte Matrize.

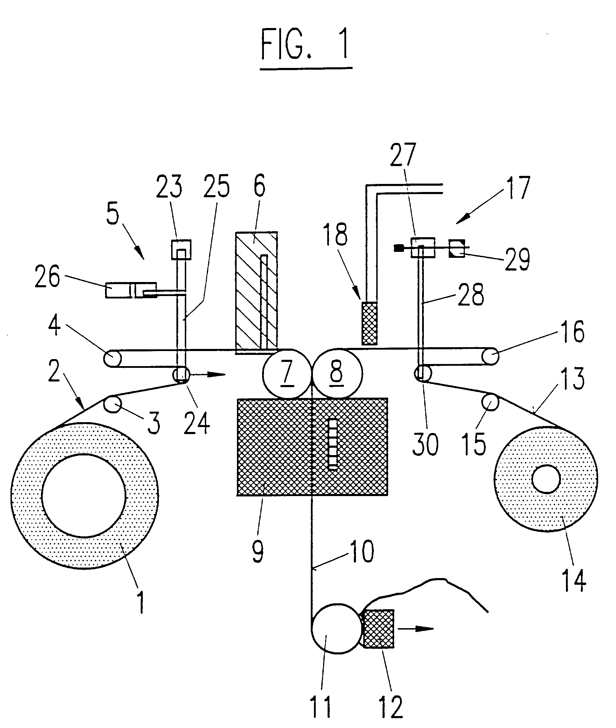

In Figur 1 erkennt man, von links nach rechts gesehen, die Vorratsrolle 1 für die Metallfolie 2, die über Umlenkrollen 3 und 4 und einer Spannungsmess- und -Einstellvorrichtung 5, hier kurz Spannungsregler genannt, an eine Dosier-Einrichtung 6 für Licht-, insbesondere UV-härtbaren Klebstoff gelangt, wo der Rand in einem schmalen Ueberlappungsbereich von vorzugsweise 3 mm Breite mit dem Klebstoff bestrichen wird und zu den beiden Anpressrollen 7 und 8 gelangt.

Die Kunststoff-Folie 13 wird von der Vorratsspule 14 abgezogen und über die Umlenkrollen 15 und 16 geleitet sowie durch den Spannungsregler 17 auf die nötige Spannung eingestellt. Kurz vor den Anpressrollen 7 und 8 wird mindestens der zu verklebende Rand der Kunststoff-Folie durch eine Koronaentladungs-Station 18 geleitet, um durch Erhöhung der Oberflächen-Energie eine bessere Benetzbarkeit für den Klebstoff zu erzielen. Durch diese Behandlung wird erreicht, dass einerseits die Verbindung Metall/Kunststoff verbessert wird und andererseits eine relativ kleine Ueberlappung notwendig ist, um die notwendige Zerreissfestigkeit herzustellen.

Bei den Anpressrollen 7 und 8 werden beide Folien vereinigt und gelangen dann zur Polymerisationseinrichtung 9, in der die Klebstelle mit UV-Licht bestrahlt wird. Bei der Herstellung von Verbundmatrizen für die Dentaltechnik gelangt die zusammengefügte Verbundfolie 10 über eine Rolle 11 und über eine Anpressvorrichtung 12 zu einem nicht dargestellten Stanzwerkzeug, um gebrauchsfertige Matrizen herzustellen.

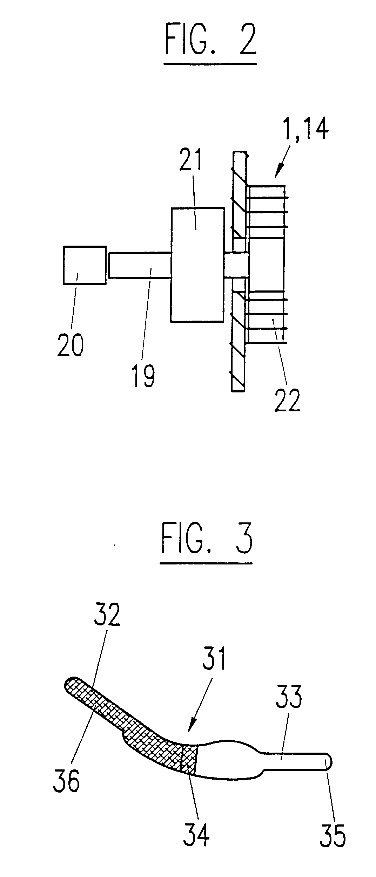

Die beiden Rollen 1 und 14 werden angetrieben. Im Ausführungsbeispiel gemäss Figur 2 wird die Welle 19 von einem Motor 20 angetrieben, wobei mit der Welle ein Uebersetzungsgetriebe 21 verbunden ist, das beispielsweise ein Uebersetzungsverhältnis von 1:40 aufweist und auf die Spule 22 wirkt.

Die beiden Spannungsregler 5 und 17 haben im Prinzip die gleiche Aufgabe, doch ist die Lösung jeweils verschieden, da verschiedene Kräfte auf die Metallfolie oder auf die Kunststoff-Folie wirken sollen. Der Spannungsregler 5 enthält eine Messdose 23, die an einem mit einer Umlenkrolle 24 versehenen Hebel 25 angeordnet ist, wobei ein pneumatisch angetriebener Zylinder 26 auf den Hebel wirkt, um eine Spannung von beispielsweise 50 N an der Umlenkrolle 24 zu erzeugen.

Die Messdose 27 des Spanungsreglers 17 ist an einem Hebel 28 angeordnet, auf den ebenfalls eine Kraft wirkt, die beispielsweise aus einem Gewicht 29 besteht, um auf die Umlenkrolle 30 eine Spannkraft auszuüben. Diese Spannkraft muss selbstverständlich geringer sein, um die Kunststoff-Folie zu spannen und kann beispielsweise 2 N betragen. Wichtig ist, dass die Dehnung der beiden Folien etwa den gleichen Betrag ausmachen, um zu verhindern, dass nach dem Zusammenkleben die gemeinsame Folie nach der Polymerisation sich wie ein Engelhaar aufwickelt.

Die Station 18 zur Erzeugung einer Koronaentladung ist an sich bekannt und braucht hier nicht näher erläutert zu werden.

Aus der Beschreibung ist ersichtlich, dass die beiden Vorratsrollen 1 und 14, bzw. die Folien derart gegeneinander verschoben sind, dass nur eine relativ schmale Ueberlappung von 2 bis 4 mm, vorzugsweise 3 mm entsteht. Selbstverständlich kann je nach Klebstoff und/oder Material eine verschieden breite Ueberlappung optimal sein. Die Rolle 11 ist ebenfalls von einem Motor angetrieben, während die Anpressvorrichtung 12 geeignete Gegenrollen aufweist. Die anschliessende Stanzvorrichtung ist hier nicht dargestellt und kann als an sich bekannt vorausgesetzt werden.

In der Stanzvorrichtung werden die Matrizen gemäss Figur 3 herausgestanzt, wobei die Matrize 31 aus einem Metallteil 32 und einem durchsichtigen Kunststoffteil 33 besteht und die Ueberlappung 34 symbolisch dargestellt ist. Die beiden Enden 35 und 36 der Matrize sind schmäler als das Mittelteil, um diese Enden bequem in das Matrizenspanngerät stecken zu können. Die beiden verschiedenen Materialien müssen jedoch nicht notwendigerweise wie in Figur 3 dargestellt miteinander verbunden sein, es könnte für verschiedene Anwendungen auch denkbar sein, die beiden Materialien längsweise oder in einer anderen Anordnung zusammenzufügen.

In vorliegendem Beipsiel weist die Stahlfolie eine Dicke von 0,038 mm auf. Sie kann aber auch eine Dicke von 0,020 bis 0,060 mm, insbesondere von 0,030 bis 0,040 mm aufweisen. Als Kunststoff-Folie wurde eine Polyesterfolie, insbesondere eine unter dem Handelsnamen Mylar bekannte Polyethylenterephtalat-Folie verwendet, mit der für Matrizen üblichen Dicke von 0,04 bis 0,08 mm.

Bei der Verwendung von oben beschriebenen Stahlfolien und Polyesterfolien und bei der Vorbehandlung der Kunststoff-Folie durch eine Koronaentladung stellte es sich heraus, dass der unter dem Handelsnamen Dimax!128-M der Dimax Corporation hergestellte, UV-härtbare Klebstoff besonders vorteilhaft ist und eine Zugfestigkeit erbrachte, die bei den anschliessenden klinischen Versuchen als völlig ausreichend erachtet wurde. Selbstverständlich ist die Erfindung nicht auf diesen Klebstoff beschränkt. Andere Licht- und UV-härtbare Klebstoffe mit ähnlichen Verbundeigenschaften und Verträglichkeit, wie z.B. unter dem Handelsnamen Delo-Photobond bekannt oder ein Einkomponenten-UV-härtbarer Acrylat-Klebstoff können auch verwendet werden.

## Patentansprüche

1. Verfahren zur Verbindung einer Metall-Folie (1) mit einer Kunststoff-Folie (13), wobei die Kunststoff-Folie vor dem Verbinden durch eine Korona-Entladung behandelt wird und beide Folien je von einer Vorratsspule (1, 14) abgezogen werden, dadurch gekennzeichnet, dass die Kunststoff-Folie auf einer schmalen Randzone einer Korona-Entladung unterworfen wird und mindestens eine Folie auf einer schmalen Randzone mit einem Licht-härtbaren Klebstoff versehen wird, woraufhin die beiden behandelten Randzonen der Folien zusammengepresst und mittels Licht, insbesondere UV-Strahlung, bestrahlt werden, um eine Polymerisation des Klebstoffes herbeizuführen.

2. Verfahren zur Herstellung einer aus einem Metall- (32) und aus einem Kunststoffteil (33) bestehenden Dental-Matrize (31) durch Verbindung einer Metall-Folie (2) mit einer Kunststoff-Folie (13), dadurch gekennzeichnet, dass beide Folien je von einer Vorratsspule (1, 14) abgezogen werden und die Kunststoff-Folie vor dem Verbinden auf einer schmalen Randzone einer Korona-Entladung unterworfen wird und eine der beiden Folien auf einer schmalen Randzone mit einem Licht-härtbaren Klebstoff versehen wird, woraufhin die beiden Folien an ihren behandelten Randzonen zusammengepresst und mittels Licht, insbesondere UV-Strahlung, bestrahlt werden, um eine Polymerisation des Klebstoffes herbeizuführen, woraufhin die vereinigte Folie über eine Transport-Einrichtung einer Bearbeitungsstation zum Ausstanzen der Matrizen zugeführt wird.

3. Verfahren nach Anspruch 1 oder 2, dadurch gekennzeichnet, dass jede Folie hinter der Vorratsspule von einem Spannungsregler (5, 17) derart gespannt wird, dass die Dehnung für beide Folien etwa die gleiche ist, wobei die Metall-Folie über 20 mal mehr gespannt wird als die Kunststoff- Folie.

4. Verfahren nach einem der Ansprüch 1 bis 3, dadurch gekennzeichnet, dass die beiden Folien derart gegeneinander versetzt angeordnet sind, dass eine Ueberlappungsbreite für die Verklebung von 2 bis 4 mm, insbesondere von ca. 3 mm, entsteht.

5. Verfahren nach einem der Ansprüche 1 bis 4, dadurch gekennzeichnet, dass die Metall-Folie eine Stahlfolie mit einer Dicke von 0,020-0,060 mm, insbesondere von 0,030 bis 0,040 mm, ist.

6. Verfahren nach einem der Ansprüche 1 bis 5, dadurch gekennzeichnet, dass als Kunststoff-Folie eine Folie aus Polyester, insbesondere aus Polyethylenterephtalat, verwendet wird.

7. Nach dem Verfahren gemäss einem der Ansprüche 1 bis 5 hergestellte Matrize (31) für die Dentalbehandlung aus einem Stahlteil (36) mit einer Dicke von 0,020-0,060 mm, vorzugsweise 0,030 bis 0,040 mm, insbesondere 0,038 mm, und einem Teil aus Polyester.

8. Matrize nach Anspruch 1, dadurch gekennzeichnet, dass ihre beiden Enden (35, 36) schmäler sind als ihr Mittelteil.

## Claims

1. Method for combining a metal foil (1) with a foil (13) of a synthetic material, the plastic foil being treated prior to bonding with a corona discharge, and the two foils being unwound from respective supply rolls (1, 14), characterised in that the plastic foil is subjected to a corona discharge on a narrow border region thereof, and that at least one of the foils is provided with a light curing adhesive on a narrow border region thereof, whereupon the two treated border regions of the foils are pressed together and irradiated with light, more particularly with ultraviolet radiation, in order to cause polymerisation of the adhesive.

2. Method for the manufacture of a dental matrix consisting of a metal portion (32) and a portion (33) of a synthetic material by combining a metal foil (2) with a foil (13) of a synthetic material, characterised in that the two foils are unwound from respective supply rolls (1, 14) and the plastic foil is subjected prior to bonding to a corona discharge on a narrow border region thereof, and in that one of the two foils is provided with a light-curing adhesive on a narrow border region thereof, whereupon the treated border regions of the two foils are pressed together and irradiated with light, more particularly with ultraviolet radiation, in order to cause polymerisation of the adhesive, whereupon the combined foil is supplied by a transport device to a processing station in order to punch out the matrix bands.

3. Method according to claim 1 or 2, characterised in that each one of the foils is tensioned subsequent to the respective supply roll by a tension regulator in such a manner that the elongation of both foils is approximately equal, the tensioning of the metal foil being more than 20 times stronger than that of the plastic foil.

4. Method according to one of claims 1 to 3, characterised in that the two foils are disposed in mutually offset positions such that an overlapping width for bonding of 2 to 4 mm, more particularly of approx. 3 mm results.

5. Method according to one of claims 1 to 4, characterised in that the metal foil is a steel foil having a thickness of 0.020 to 0.060 mm, more particularly of 0.030 to 0.040 mm.

6. Method according to one of claims 1 to 5, characterised in that the plastic foil is a polyester foil, more particularly of polyethylene terephtalate.

7. Matrix band (31) for dental restorations manufactured according to the method of one of claims 1 to 5, composed of a steel portion (36) having a thickness of 0.020 to 0.060 mm, preferably of 0.030 to 0.040 mm, more particularly of 0.038 mm, and of a polyester portion.

8. Matrix band according to claim 7, characterised in that both ends (35, 36) thereof are narrower than its central portion.

## Revendications

1. Procédé de liaison d'une feuille métallique (1) et d'une feuille en matière synthétique (13), la feuille en matière synthétique étant soumise, avant la liaison, à une décharge en effet corona, et les deux feuilles étant déroulées d'une bobine d'alimentation (1, 14) chacune, caractérisé en ce que la feuille en matière synthétique est soumise à une décharge en effet corona sur une zone étroite en bordure de la feuille, et qu'au moins l'une des feuilles est pourvue d'un adhésif durcissant à la lumière sur une zone étroite en bordure de la feuille, les deux zones en bordure des feuilles étant ensuite pressées l'une contre l'autre et exposées à la lumière, plus particulièrement aux rayons UV, afin d'effectuer une polymérisation dudit adhésif.

2. Procédé de fabrication d'une matrice dentaire composée d'une partie métallique (32) et d'une partie en matière synthétique (33) par liaison d'une feuille métallique (2) et d'une feuille en matière synthétique (13), caractérisé en ce que les deux feuilles sont déroulées d'une bobine d'alimentation (1, 14) chacune, et que la feuille en matière synthétique est soumise, avant la liaison, à une décharge en effet corona sur une zone étroite en bordure de la feuille et l'une des deux feuilles est pourvue d'un adhésif durcissant à la lumière sur une zone étroite en bordure de la feuille, les deux zones en bordure des feuilles étant ensuite pressées l'une contre l'autre et exposées à la lumière, plus particulièrement aux rayons UV, afin d'effectuer une polymérisation dudit adhésif, et la feuille unie étant ensuite amenée par un dispositif de transport à une station de traitement afin de découper les matrices.

3. Procédé selon la revendication 1 ou 2, caractérisé en ce que chaque feuille est tendue après ladite bobine d'alimentation par un régulateur de tension (5, 17) de telle manière que l'extension des deux feuilles est approximativement égale, la feuille métallique étant tendue plus que 20 fois plus fortement que la feuille en matière synthétique.

4. Procédé selon l'une des revendications 1 à 3, caractérisé en ce que les deux feuilles sont réciproquement décalées de telle manière qu'il en résulte un recouvrement pour le collage de 2 à 4 mm, plus particulièrement de 3 mm approximativement.

5. Procédé selon l'une des revendications 1 à 4, caractérisé en ce que la feuille métallique est une feuille en acier d'une épaisseur de 0,020 à 0,060 mm, plus particulièrement de 0,030 à 0,040 mm.

6. Procédé selon l'une des revendications 1 à 5, caractérisé en ce que la feuille en matière synthétique est une feuille en polyester, plus particulièrement en polyéthylène-téréphtalate.

7. Matrice (31) pour traitements dentaires fabriquée selon le procédé selon l'une des revendications 1 à 5, composée d'une partie en acier (36) d'une épaisseur de 0,020 à 0,060 mm, préférablement de 0,030 à 0,040 mm, plus particulièrement de 0,038 mm, et d'une partie en polyester.

8. Matrice selon la revendication 7, caractérisée en ce que ses deux extrémités (35, 36) sont plus étroites que sa partie centrale.
